# EUROPÄISCHE PATENTSCHRIFT

(11) **EP 1 211 145 B1**
(45) Veröffentlichungstag und Bekanntmachung des Hinweises auf die Patenterteilung: **01.12.2004**
(21) Anmeldenummer: 01125131.1
(22) Anmeldetag: 23.10.2001
(51) Int. Cl.: B60R 21/20, B62D 1/11

(54) **Lenkrad-Airbag-Rückhaltesystem für ein Kraftfahrzeug**
Steering wheel airbag for a vehicle
Coussin gonflable dans un volant pour un véhicule

(30) Priorität: 25.11.2000 DE 10058656; 30.03.2001 DE 10115957
(43) Veröffentlichungstag der Anmeldung: 05.06.2002
(73) Patentinhaber: Volkswagen Aktiengesellschaft, 38436 Wolfsburg (DE)
(72) Erfinder: Sinnhuber, Ruprecht, 38518 Gifhorn (DE); Wohllebe, Thomas, 38110 Braunschweig (DE)
(74) Vertreter: Neubauer, Hans-Jürgen, Dipl.-Phys.

(56) Entgegenhaltungen:
- WO-A-97/34783
- WO-A-98/28166
- DE-A- 19 749 914
- DE-A- 19 904 072
- DE-A- 19 911 682
- DE-A- 19 923 483
- DE-U- 29 820 479

## Beschreibung

Die Erfindung betrifft ein Lenkrad-Airbag-Rückhaltesystem für ein Kraftfahrzeug, insbesondere für eine Multikollision und einen in OOP (out of position) befindlichen Fahrer.

Es sind Lenkrad-Rückhaltesysteme bekannt, bei denen ein in der Nabe des Lenkrades oder außerhalb derselben fahrerseitig am Lenkrad angeordneter Airbag mit einem in der Lenksäule angeordneten Diffusor und einem in oder außerhalb der Lenksäule angeordneten Gasgenerator in Wirkverbindung steht (DE 295 16 625, EP 0 615 889). Die EP 0 721 865 A2 hat eine Airbag-Einrichtung zur Anordnung in einem in der Lenksäule lenkradseitig ausgebildeten zylindrischen Hohlraum zum Gegenstand, die ein zylindrisches Gehäuse zur Anordnung in dem Hohlraum aufweist, das den Gasgenerator, den Diffusor und den Airbag beherbergt, wobei letztere am lenkradseitigen Ende des Gehäuses gehaltert ist. Eine vergleichbare Lösung, beschränkt auf den Gasgenerator und den Diffusor, beschreibt auch die DE 295 16 621 U1. Bei all diesen Lenkrad-Rückhaltesystemen ist der Airbag durch eine fahrerseitig vor der Nabe und innerhalb des Lenkradkranzes angeordnete Kappe abgedeckt, die im Falle der Aktivierung der Airbageinrichtung den Airbag zur fahrerseitigen Entfaltung vor dem Lenkrad freigibt.

Damit ein solches Lenkrad-Rückhaltesystem auch gegenüber einem OOP befindlichen Fahrer seine bestimmungsgemäße Sicherheitswirkung entfalten kann, ist es aus der WO 98/28166 bekannt, das Gehäuse des Gasgenerators als ein drehmomentübertragendes Teil der Lenksäule auszubilden und zwischen dem Lenkrad und einem Lenksäulenunterteil anzuordnen und teleskopierbar mit diesem zu verbinden, wobei eine axiale Verschiebung des Gehäuses zum Lenksäulenunterteil zwischen einer Normalgebrauchsposition und einer Crashposition unter Überwindung eines die Verschiebung blockierenden Elementes durch eine auf den Gasgenerator wirkende Druckkraft vorbestimmter Größe gegeben ist. Diese Lösung ist wohl geeignet, einen in vorgebeugter Position (OOP) befindlichen Fahrer bei einem Primäraufprall zu schützen, weniger jedoch bei einem Sekundäraufprall.

Um bei einem komplexen Unfallgeschehen den Fahrer über die Dauer des ersten Fahrzeugaufpralls hinaus auch bei einem Sekundäraufprall schützen zu können, ist in der DE 199 23 483 ein Airbag-Rückhaltesystem mit einem Airbag vorgeschlagen worden, der zur Bildung von Nebenkammern seitlich an diesem und/ oder auf der dem Fahrzeuginsassen abgewandten Seite desselben dehnbare elastische Gewebeteile aufweist, die nach ihrer Entfaltung bei Sinken des Gasdruckes im Airbag zumindest einen Teil des Gases in diesen zurückdrücken, so dass der Airbag bei einer Sekundärkollision auch eine Rückhaltefunktion erfüllen kann. Dieses Rückhaltesystem schützt jedoch einen OOP befindlichen Fahrer nicht.

Aud der DE 197 49 914 A1 ist eine Vorrichtung für einen Aufprallschutz an einem Lenkrad eines Kraftfahrzeuges mit einem Gasgenerator und einem Airbag bekannt. Im aufgeblasenen Zustand weist der Airbag eine ringförmige Gestalt auf, wobei in der dem Fahrer zugewandten Frontfläche des Airbags eine kegel- bzw. trichterförmige Vertiefung ausgebildet ist. Mit einer derartigen Ausbildung des Airbags soll dessen Aggressivität insbesondere bei out-off-position-Situationen reduziert werden.

Aus der gattungsgemäßen DE 199 11 682 A1 ist ein Lenkrad-Airbag-Rückhaltesystem für ein Kraftfahrzeug mit einem Lenkrad mit einer Nabe und mit Speichen und einer im Bereich vor der Nabe und innerhalb des Lenkradkranzes angeordneten Kappe und einer auf der dem Fahrer abgewandten Seite der Kappe angeordneten Airbageinrichtung mit einem Gasgenerator, einem Diffusor und einem fahrerseitig vor der Kappe und dem Lenkradkranz entfaltbaren Airbag bekannt, wobei die Kappe zu einem Rückhaltepolster ausgebildet ist und wobei wenigstens eine Austrittöffnung für den Airbag derart angeordnet ist, dass dieser im Bereich zwischen dem Rückhaltepolster und dem Lenkradkranz aus dem Lenkrad hervortritt.

Konkret ist hier an in der Lenkradkranzebene verlaufenden Lenkradspeichen ein Modulgehäuse angeschlossen, in dem der Gasgenerator aufgenommen ist, wobei der dem Fahrer zugewandte Kappenbereich des Lenkrades als Rückhaltepolster ausgebildet ist und in einem seitlichen radialen Bereich des Modulgehäuses eine durch eine Klappe verschließbare Airbagaustrittöffnung ausgebildet ist, durch die hindurch der Airbag im Falle seiner Aktivierung austritt. Dadurch entfaltet sich der Airbag zunächst seitlich nach oben und dann erst in Richtung des vor dem Lenkrad sitzenden Fahrers. Die Lenkradnabe ist ebenfalls am Modulgehäuse auf der der als Rückhaltepolster ausgebildeten Kappe gegenüberliegenden Seite ausgebildet.

Aufgabe der Erfindung ist es, ein Lenkrad-Airbag-Rückhaltesystem für ein Kraftfahrzeug zu schaffen, das einfach aufgebaut ist und mit dem die Aggressivität des Airbags bei einer out-off-position-Situation reduziert werden kann.

Diese Aufgabe wird gelöst mit den Merkmalen des Anspruchs 1.

Gemäß Anspruch 1 erstrecken sich die Speichen von dem Lenkradkranz ausgehend zu der auf der dem Fahrer abgewandten Seite des Lenkradkranzes angeordneten Nabe und bilden ein Skelett für einen Raum, in dem die Airbageinrichtung untergebracht ist. Dieser durch die Speichen gebildete Raum ist von einer Verkleidung, in der die Austrittöffnung angeordnet ist, umschlossen.

Mit einem derartigen erfindungsgemäßen Aufbau wird eine radiale Entfaltungsrichtung des Airbags im Anfangsstadium erreicht und damit eine Ausweichmöglichkeit des Airbags in einer out-off-position Situation des Fahrers im Speichenbereich zur Rückseite des Lenkrades hin zur Verfügung gestellt. Zudem steht mit dem Rückhaltepolster bei einer Multikollision ein Rückhaltemittel zur Verfügung, das aber auch bei einer anderen Crashbelastung Energie absorbiert. Besonders vorteilhaft bei dem erfindungsgemäßen Aufbau ist jedoch, dass hier die Speichen in einer vorteilhaften Doppelfunktion von der Lenkradkranzebene weg nach hinten bis zu einer von der Lenkradkranzebene beabstandeten Nabe geführt sind und damit ein Skelett für einen Aufnahmeraum der Airbageinrichtung ausbilden, der von einer die Austrittöffnung aufweisenden Verkleidung einfach umschlossen und ummantelt werden kann. Ein derartiger Aufbau ist fertigungstechnisch und herstellungstechnisch einfach und preiswert herstellbar, wobei zudem auch die Bauteilvielfalt reduziert werden kann.

Die Austrittöffnung ist in einer bevorzugten Ausführungsform von einer durch Sollbruchlinien mit der Verkleidung verbundenen Klappe verschlossen, die nabenseitig angelenkt ist, insbesondere über ein Filmscharnier. Lenkradseitig ist zwischen der Klappe und der Verkleidung oder einer Speiche wenigstens ein Band angeordnet, das die bei einer Aktivierung des Airbagsystems aufreißende Klappe in einer einen Austrittsschlitz für den Airbag bildenden Offenstellung haltert und zugleich eine Führungsfläche für diesen bildet. Bei einer OOP des Fahrers reißt das Band durch den Druck des nach der Rückseite ausweichenden Airbag, die Klappe öffnet sich weit, und der Airbag kann sich hinter dem Lenkradkranz entfalten, so dass der Fahrer entlastet wird. Überdies sind durch die Höhe des Rückhaltepolsters und des gebildeten Freiraums zu und zwischen den Speichen eine weitere Ausweichmöglichkeit des sich entfaltenden Airbags und eine Entlastung des Fahrers gegeben.

Vorzugsweise ist die Airbageinrichtung zu einem Airbagmodul zusammengefaßt, das an wenigstens zwei Speichen befestigt ist. Die Montage dieses Airbagmoduls kann auf einfache Weise von unten durch die Klappe und zwei Speichen hindurch erfolgen. Das Rückhaltepolster ist bei dieser Ausführung ebenfalls an den Speichen befestigt, wobei es von vorn an diesen positioniert und von der Rückseite her festgelegt wird.

Bei einer weiteren Ausführungsform können die Airbageinrichtung und das Rückhaltepolster zu einem Modul zusammengefaßt sein, das nabenseitig an den Speichen gehaltert und lenkkranzseitig axial zwischen diesen angeordnet ist. Das Modul ist so gestaltet, dass das Rückhaltepolster an einer Stirnseite des im wesentlichen zylinderförmig ausgebildeten Diffusors und der Gasgenerator an der anderen Stirnseite des Diffusors angeordnet sind. Der Gasgenerator kann über Deformationselemente an den Speichen gehaltert und dieser und/ oder der Diffusor können selbst als Deformationselemente ausgebildet sein. Der Airbag ist dabei um den Diffusor angeordnet. Das Speichenskelett ist von einer Verkleidung umgeben, in der im Bereich zwischen dem Rückhaltepolster und dem Lenkradkranz eine ringförmige verdeckte Austrittsöffnungen für den Airbag angeordnet ist, der als ringförmiger Trichterairbag entfaltbar ist, dabei das Rückhaltepolster einschließend. Alternativ dazu können auch zwei sich zu einem Trichter ergänzende Airbags mit dem Diffusor gekoppelt sein, denen jeweils eine Austrittsöffnung zugeordnet ist und die bei ihrer Entfaltung jeweils zur Hälfte das Rückhaltepolster einschließen. Der oder die Airbags können symmetrisch oder asymmetrisch sein.

Bei dieser Ausführung können der bzw. die Airbags bei einem in OOP befindlichem Fahrer zwischen und durch die Speichen nach der Rückseite des Lenkrades ausweichen. Das Rückhaltepolster wirkt bei einer Sekundär- oder weiteren Kollision als energieaufnehmendes Rückhaltemittel. Je nach Ausführung wird dessen Rückhaltefunktion durch die als crashenergieaufnehmende Deformationselemente ausgebildeten Halterungselemente für das Modul - und gegebenenfalls die ebenso ausgebildeten Komponenten des Moduls - verstärkt. Die Montage des Moduls erfolgt auf einfache Weise durch Einschieben desselben von der Seite des Lenkradkranzes aus und nabenseitiges Festlegen an den Speichen, vorzugsweise durch Schraubverbindungen.

Bei allen vorbeschriebenen Ausführungen können alle oder auch nur die unter der Lenkradachse befindlichen Speichen als Deformationselemente ausgebildet sein. Dadurch ist eine Deformationsmöglichkeit gegeben, durch die ein positives Anstellen des Lenkradkranzes an den Thorax des Fahrers und eine erhöhte Energieabsorption, insbesondere bei einem Sekundäraufprall, herbeigeführt werden.

Das Lenkrad selbst ist in der bevorzugten Ausführungsform aus einem ersten rohrförmigen Teil für den Lenkradkranz und einem zweiten rohrförmigen Teil für die Nabe und die Speichen gebildet. Letztere sind durch axiale Einschnitte bis zum vorbestimmten Nabenbereich und anschließende Umformung der dadurch entstandenen Segmente gebildet. Die freien Enden der Speichen sind mit dem rohrförmigen Lenkradkranz verbunden, insbesondere verschweißt. Die im Querschnitt gebogenen und dadurch weitgehend biegesteifen Speichen können zusätzlich durch in deren Längsrichtung eingebrachte Sicken versteift werden. Vorteilhaft weist das Lenkrad vier Speichen auf, die paarweise auch unsymmetrisch zueinander beabstandet sein können, von denen zwei im oberen Lenkkranzbereich und zwei im unteren Lenkkranzbereich mit diesem verbunden sind. Insbesondere dienen die oberen beiden Speichen bei der ersten Ausführungsform der Befestigung des Airbagmoduls. Der Diffusor und der Airbag sind dabei so angeordnet, dass der Airbag bei seiner Entfaltung zwischen den beiden unteren Speichen und dem Rückhaltepolster aus dem Lenkrad austritt und sich vor dem Rückhaltepolster und dem Lenkradkranz entfaltet. Bei beiden Ausführungen ist das Rückhaltepolster mit Schaumstoff hinterfüttert.

Das Lenkrad-Airbag-System kann auch so ausgeführt sein, dass das Rückhaltepolster ein vorzugsweise mit Schaumstoff ummanteltes gepolstertes Blechhohlteil ist, das zusätzlich mit einer seitlichen Öffnungsklappe vor der Anordnungsebene des Lenkradkranzes für einen Airbagaustritt bei normaler Sitzposition des Fahrers versehen ist. Als Gasgenerator kann auch ein n-Stufengenerator eingesetzt werden, der ein Nachzünden zur erneuten Befüllung des Airbags bei einer Multikollision ermöglicht.

In einer besonders bevorzugten Ausführungsform ist ein Rückhaltesystem vorgesehen, das zur Wiederbefüllung eine Refillfunktion für wenigstens einen Airbag aufweist dergestalt, dass bei einem Aufprall eines Fahrzeuginsassen auf den wenigstens einen Airbag Gas aus diesem herausdrückbar und in wenigstens einen zusätzlichen Gasspeicher des Rückhaltesystems eindrückbar ist. Nach der Aufprallbelastung bei wenigstens teilweise erschlafftem wenigstens einen Airbag kann dann das im wenigstens einen zusätzlichen Gasspeicher aufgenommene Gas zur Wiederbefüllung des wenigstens einen Airbags aus dem wenigstens einen Gasspeicher heraus in den wenigstens einen Airbag zurückgedrängt und/oder zurückgeblasen werden. Eine derartige Refill-Funktion ist insbesondere bei Mehrfachkollisionen von Vorteil, da hier dann das ansonsten über Ausblasöffnungen am Airbag in die Umgebung abgegebene Gas vorteilhaft zur Wiederbefüllung des Airbags verwendet werden kann. Dies bewirkt zum einen eine relativ schnelle Wiederbefüllung und hat des weiteren den Vorteil, dass ein insgesamt abgasarmes Airbagsystem ohne eine Gasbelastung des Fahrzeuginnenraums zur Verfügung gestellt wird.

In einer bevorzugten konkreten Ausführungsform ist ein Lenksäulenabschnitt als Druckkammer ausgebildet, in der ein Druckkolben im Grundzustand durch ein Haltemittel in einer oberen Druckkolbenposition gehalten ist. Bei einem Aufprall eines Fahrzeuginsassen auf den Airbag ist der Druckkolben mit Gas aus dem Airbag beaufschlagbar, so dass der Druckkolben in der Druckkammer gegen die Haltekraft des Haltemittels gasdicht aus der oberen Druckkolbenposition heraus von der Lenkradnabe weg nach unten in eine untere Druckkolbenposition verlagerbar ist. Nach der Aufprallbelastung und dem wenigstens teilweise Erschlaffen des Airbags ist der Druckkolben durch das Haltemittel wieder in die obere Druckkolbenposition verlagerbar, so dass das in die Druckkammer eingeblasene Gas zur Wiederbefüllung des Airbags in diesen einblasbar ist. Ein derartiger Aufbau ist wenig störanfällig und weist daher eine gute und hohe Funktionssicherheit auf.

Besonders vorteilhaft ist die Druckkammer dabei in einem oberen Lenksäulenabschnitt ausgebildet, in dem der Druckkolben formschlüssig geführt ist. Die Druckkammer ist vorzugsweise zylinderrohrförmig ausgebildet, deren ebenfalls zylindrisch ausgebildeter Kolben gasdicht geführt ist. Ein derartiger Aufbau ist besonders einfach herzustellen.

Grundsätzlich gibt es verschiedene Möglichkeiten das Haltemittel auszubilden. Bevorzugt ist das Haltemittel durch einen Kraftspeicher, z. B. ein Federelement, oder ein komprimierbares Medium, z. B. Gas, gebildet.

Gemäß einer alternativen Ausführungsform kann der Airbag jedoch auch mehrkammrig aus einer Rückhalte-Airbagkammer und wenigstens einer weiteren damit gekoppelten, elastischen Refill-Airbagkammer als zusätzlichem Gasspeicher ausgebildet sein, so dass bei einem Aufprall eines Fahrzeuginsassen auf die Rückhalte-Airbagkammer Gas aus dieser in die wenigstens eine Refill-Airbagkammer drückbar ist, wobei sich diese hierzu elastisch ausbeult. Nach der Aufprallbelastung und dem wenigstens teilweise Erschlaffen der Rückhalte-Airbagkammer kann dann das Gas aus der wenigstens einen Refill-Airbagkammer durch deren Zusammenziehen aufgrund deren Elastizität zur Wiederbefüllung wieder in die Rückhalte-Airbagkammer eingeblasen werden. Auch hier ergeben sich wiederum die oben genannten Vorteile.

Vorzugsweise ist die wenigstens eine Refill-Airbagkammer dabei im Bereich hinter dem Lenkradkranz angeordnet, wobei der wenigstens einen Refill-Airbagkammer im Lenkradnabentopfbereich eine durch die sich aufblasende Refill-Airbagkammer aufdrückbare Abdeckeinrichtung zugeordnet ist. Die Abdeckeinrichtung ist hier vorzugsweise durch eine oder mehrere Abdeckklappen mit Sollaufreißlinien gebildet. Dadurch wird erreicht, dass sich die Refill-Airbagkammer unter Freigabe der von der Abdeckeinrichtung abgedeckten Airbagkammeraustrittöffnung ungehindert aufblasen kann.

Bei Bedarf kann bei allen zuvor beschriebenen Ausführungsformen zum Wiederbefüllen des Airbags bzw. der Rückhalte-Airbagkammer über einen n-stufigen Gasgenerator gasgesteuert und dosiert in den Airbag bzw. die Rückhalte-Airbagkammer zudosiert werden, so dass insbesondere ein wirksamer Aufprallschutz bei Mehrfachkollisionen möglich ist. Dies ist insbesondere dann erforderlich, wenn an der Rückhalte-Airbagkammer oder am Airbag zusätzlich zu der Refillfunktion in üblicher Weise Airbagausblasöffnungen angeordnet sind.

Die Erfindung wird nachstehend anhand von Ausführungsbeispielen erläutert. In den zugehörigen Zeichnungen zeigen schematisch:
- Fig. 1: eine erste Ausführungsform eines Lenkrad-Airbag-Systems in einer Prinzipdarstellung, teilweise geschnitten,
- Fig. 2: eine Draufsicht auf das Lenkrad-Skelett,
- Fig. 3: eine zweite Ausführungsform in einer Prinzipdarstellung, teilweise geschnitten,
- Fig. 4: eine schematische Darstellung einer ersten Ausführungsform eines Rückhaltesystems mit einer Refill-Funktion, und
- Fig. 5: eine schematische Darstellung einer zweiten Ausführungsform eines Rückhaltesystems mit einer alternativen Refill-Funktion

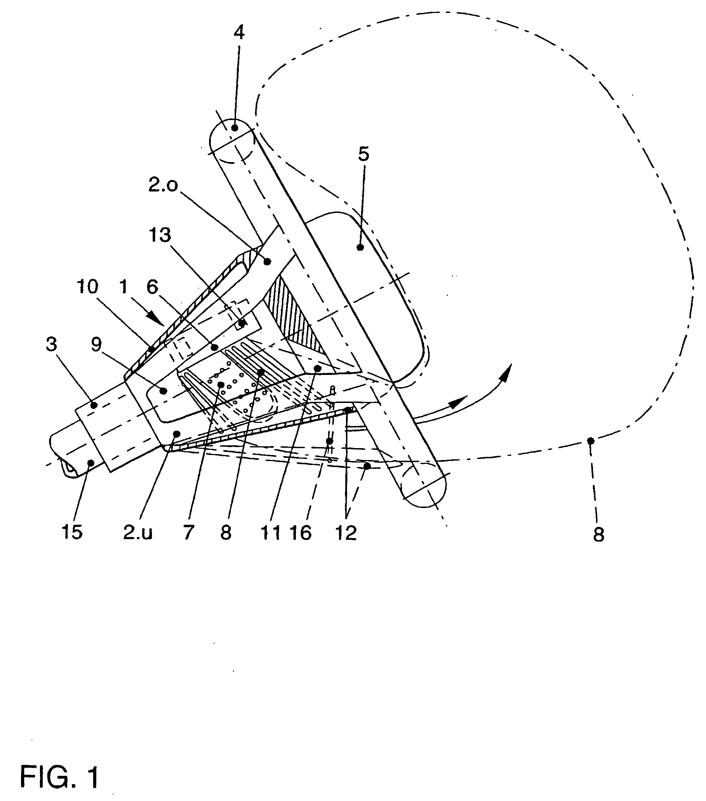

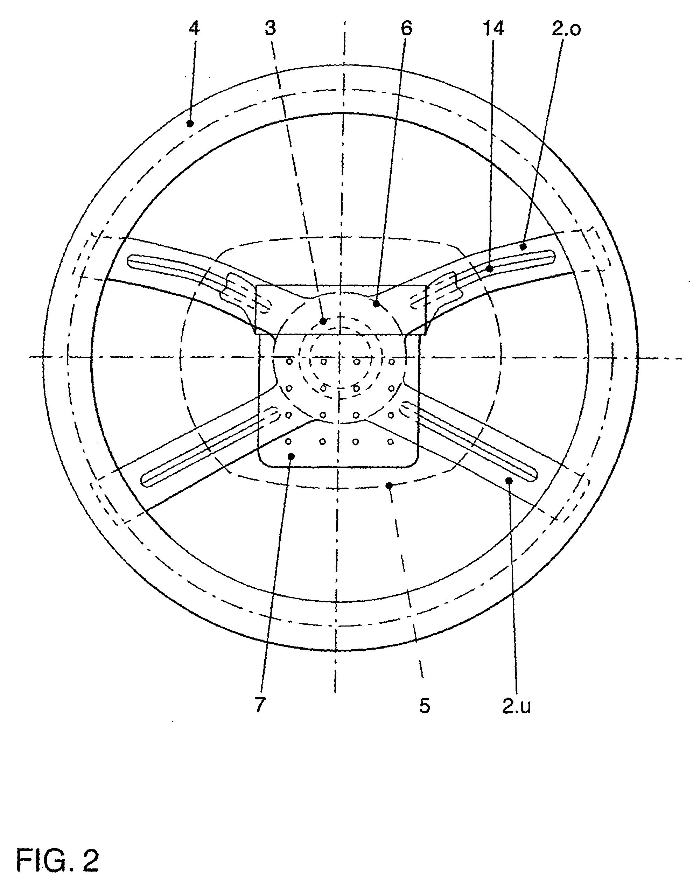

In Fig. 1 ist ein Lenkrad-Airbag-System mit einem Lenkrad 1 mit zwei oberen Speichen 2.o und zwei unteren Speichen 2.u und einem im Bereich vor dessen Nabe 3 und innerhalb des Lenkradkranzes 4 angeordneten schaumstoffhinterlegten Rückhaltepolster 5 sowie einer auf der dem Fahrer abgewandten Seite desselben angeordneten Airbageinrichtung mit einem Gasgenerator 6, einem Diffusor 7 und einem Airbag 8 dargestellt. Die Speichen 2 bilden zwischen dem Lenkradkranz 4 und der auf der dem Fahrer angewandten Seite desselben (4) angeordneten Nabe 3 ein Skelett für einen Raum 9, in dem die zu einem Airbagmodul zusammengefaßte Airbageinrichtung untergebracht ist. Der Raum 9 ist von einer Verkleidung 10 umschlossen, in der zwischen den unteren Speichen 2u eine Austrittsöffnung 11 für den Airbag 8 angeordnet ist, durch die dieser bei einer Aktivierung der Airbageinrichtung aus- und zwischen dem Rückhaltepolster 5 und dem Lenkradkranz 4 hervortritt. Die Austrittsöffnung 11 ist durch eine nabenseitig mit einem Filmscharnier angelenkte Klappe 12 verschlossen, die mit der Verkleidung 10 verbunden ist, wobei zwischen diesen (12 und 10) Sollbruchlinien ausgebildet sind. Das Airbagmodul ist über den Befestigungslaschen 13 aufweisenden Gasgenerator 6 an den oberen Speichen 2.o am Lenkrad festgelegt. Das Rückhaltepolster 5 ist an allen vier Speichen 2.o und 2.u befestigt. Diese sind Rohrausschnitte und mit der Nabe 3 einstückig verbunden. Sie sind durch Sicken 14 (Fig. 2) versteift und stellen durch ihre zwischen der Nabe 3 und dem Lenkradkranz 4 ausgebildete glockenförmige Gestalt, ihr entsprechend dem Rohrquerschnitt gebogenes Querschnittsprofil und die Sicken 14 energieaufnehmende Deformationselemente dar, die bei einer Sekundärkollision in Verbindung mit dem Rückhaltepolster 5 als energieaufnehmendes Rückhaltemittel zur Verfügung stehen. Der Lenkradkranz 4 ist aus einem rohrförmigen Profil mit kreisrundem Querschnitt gefertigt. Die Nabe 3 weist eine nicht dargestellte Innenverzahnung zur drehfesten Verbindung mit der Lenksäule 15 auf. Fig. 2 zeigt den lenkkranzseitigen Teil des Lenkrades 1. Das Rückhaltepolster 5 ist gestrichelt dargestellt. Es ist in der Darstellung vor dem Diffusor 7 und dem Gasgenerator 6 angeordnet.

Der Airbag 8 tritt bei einer Aktivierung des Airbagsystems zwischen den unteren Speichen 2.u, dem Lenkradkranz 4 und dem Rückhaltepolster 5 aus dem Lenkrad 1 hervor und entfaltet sich, wie in Fig. 1 mit strich-punktierten Linien angedeutet ist, vor dem Lenkrad 1 nach oben, dabei das Rückhaltepolster 5 und den Lenkradkranz 4 überdeckend. Die durch den Airbag 8 aufgestoßene Klappe 12 gibt die Austrittsöffnung 11 für diesen frei, wird durch ein an einer Speiche befestigtes Band 16 in einer vorbestimmten Offenstellung gehalten und dient dadurch als Führungsfläche für den Airbag 8.

Der rohrförmige Lenkradkranz 4 und die Speichen 2.o und 2.u bilden das Skelett für eine lenkkranzseitige Verkleidung des Lenkrades 1, die vorzugsweise fugenlos ausgeführt ist und die hinsichtlich Material und Oberfläche eine Vielzahl von Gestaltungsmöglichkeiten bietet. In der Verkleidung können im Bereich der Speichen 2.o und 2.u Multifunktionsund Hupenbetätigungstasten angeordnet werden.

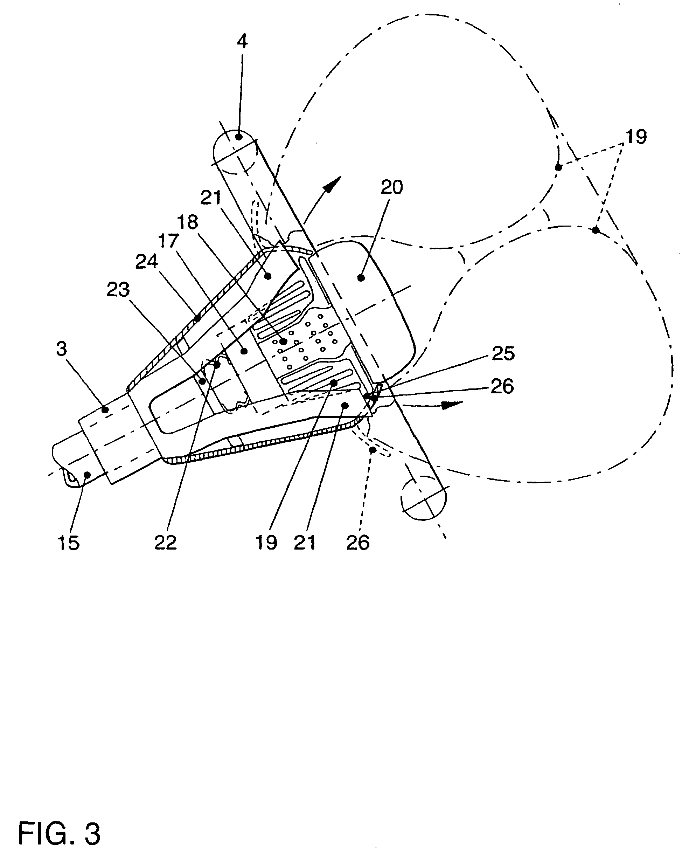

Fig. 3 zeigt eine weitere Ausführungsform, bei der die Airbageinrichtung mit einem Gasgenerator 17, einem Diffusor 18 und einem Airbag 19 mit einem Rückhaltepolster 20 zu einem Modul zusammengefaßt sind. Diese Modul ist nabenseitig an den Speichen 21 gehaltert und lenkradseitig axial zwischen diesen angeordnet. Der Gasgenerator 17 ist dabei über Deformationselemente 22 an einer zwischen den Speichen 21 befestigten Halterungsplatte 23 angebracht, und der mit diesem verbundene, entlang der Lenkradachse angeordnete und als Deformationselement ausgebildete Diffusor 18 trägt das Rückhaltepolster 20. In der das Speichen-Skelett umgebenden Verkleidung 24 ist zwischen dem Rückhaltepolster 20 und dem Lenkradkranz 4 eine dieses (20) umgebende ringförmige Austrittsöffnung 25 für den trichterförmigen Airbag 19 ausgebildet, die durch eine aus mehreren Segmente 26 gebildete Abdeckung verschlossen ist.

Bei einer Aktivierung der Airbageinrichtung wird die Abdeckung 26 aufgestoßen, und der Airbag entfaltet sich ringförmig um das Rückhaltepolster 20, dieses schließlich trichterförmig einschließend. Bei einer Sekundärkollision dient das Rückhaltepolster 20 in Verbindung mit dem Diffusor 18, den Deformationselementen 22 und den zwischen der Halterungsplatte 23 und dem Lenkradkranz 4 als Deformationselemente ausgebildeten Speichen 21 als Rückhaltemittel.

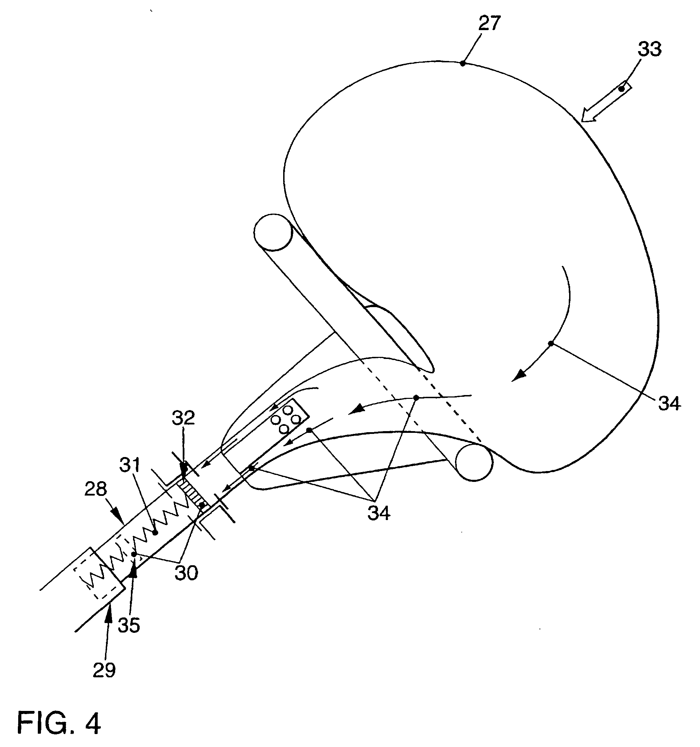

Eine vorteilhafte Weiterbildung des Rückhaltesystems mit einer Refill-Funktion für einen Airbag 27 ist in der Fig. 4 gezeigt. Wie dies dort entnommen werden kann, ist ein Lenksäulenabschnitt einer Lenksäule 29 als Druckkammer 28 ausgebildet, in der ein Druckkolben 30 im in der Fig. 4 mit durchgezogenen Linien dargestellten Grundzustand durch ein Federelement 31 in einer oberen Druckkolbenposition 32 gehalten. Der Druckkolben 30 ist dabei formschlüssig und gasdicht in der Druckkammer 28 geführt.

Bei einem Aufprall eines Fahrzeuginsassen auf den Airbag 27 entsprechend dem Pfeil 33 wird der Druckkolben 30 mit Gas aus dem Airbag 27 beaufschlagt, wie dies in der Fig. 4 durch die Pfeile 34 schematisch gezeigt ist. Dadurch wird der Druckkolben 30 in der Druckkammer 28 gegen die Haltekraft des Federelements 31 aus der oberen Druckkolbenposition 32 heraus nach unten in eine untere Druckkolbenposition 35 verlagert, wie dies in der Fig. 4 beispielhaft und schematisch strichliert eingezeichnet ist.

Nach der Aufprallbelastung und dem dadurch bedingten teilweise Erschlaffen des Airbags 27 wird dann der Druckkolben 30 durch die Federkraft des Federelements 31 wieder aus der unteren Druckkolbenposition 35 heraus in die obere Druckkolbenposition 32 verlagert, wodurch das in die Druckkammer 28 eingeblasene Gas wieder zur Befüllung des Airbags 27 in diesen eingeblasen wird. Gleichzeitig kann bei Bedarf z. B. auch über einen mehrstufigen Gasgenerator Gas dosiert in den Airbag 27 eingeblasen werden, was hier jedoch nicht dargestellt ist.

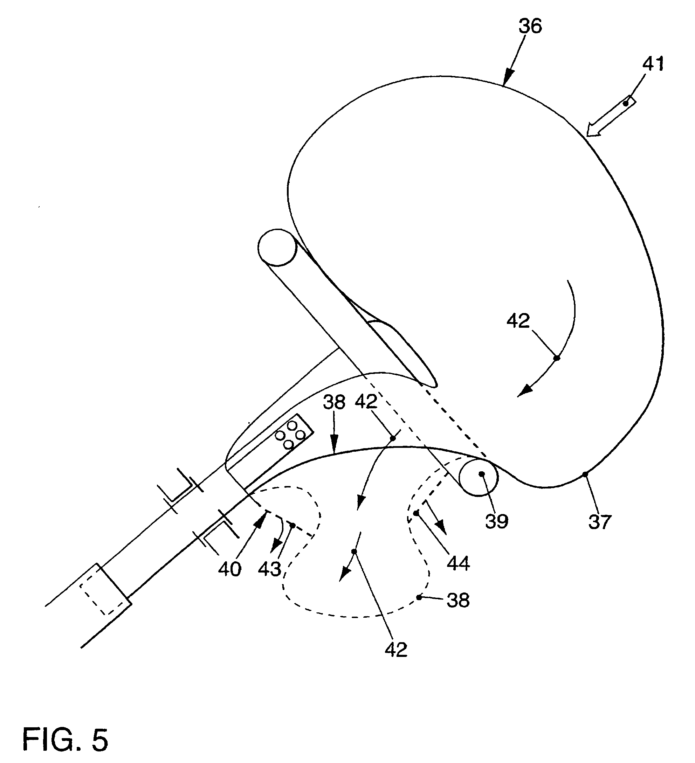

In der Fig. 5 ist schließlich eine weitere alternative Ausführungsform eines erfindungsgemäßen Rückhaltesystems mit einer Refill-Funktion für einen Airbag 36 gezeigt, bei der der Airbag 36 zweikammrig aus einer Rückhalte-Airbagkammer 37 und einer Refill-Airbagkammer 38 gekoppelt ist. Die Refill-Airbagkammer ist dabei im Bereich hinter einem Lenkradkranz 39 im Lenkradnabentopfbereich 40 angeordnet und durch einen aus einem elastischen Material hergestellten Bereich 38 des Airbags 36 gebildet, so dass die Refill-Airbagkammer 38 im nicht aktivierten Zustand, wie dies in der Darstellung der Fig. 5 mit durchgezogenen Linien gezeigt ist, einen Wandbestandteil der Rückhalte-Airbagkammer 37 bildet.

Bei einem Aufprall eines Fahrzeuginsassen entsprechend dem Pfeil 41 auf die Rückhalte-Airbagkammer 37 wird Gas aus dieser in die elastische Refill-Airbagkammer 38 gedrückt, wie dies in der Darstellung der Fig. 5 strichliert eingezeichnet ist. Die Pfeile 42 kennzeichnen dabei die Einblasrichtung des Gases.

Der Refill-Airbagkammer 38 ist hier im Lenkradnabentopfbereich 40 eine Abdeckeinrichtung in Form zweier Abdeckklappen 43, 44 zugeordnet, die durch die sich aufblasende Refill-Airbagkammer 38 nach außen aufklappen. Für ein definiertes Ausbilden der Abdeckklappen 43, 44 sind dabei vorzugsweise hier nicht dargestellte Sollaufreißlinien in an sich bekannter Weise vorgesehen. Durch dieses Aufdrücken der Abdeckklappen 43, 44 kann sich die Refill-Airbagkammer 38 ungehindert entfalten.

Nach der Aufprallbelastung, nach der die Rückhalte-Airbagkammer 37 teilweise erschlafft ist, kann dann das Gas aus der Refill-Airbagkammer 38 durch deren Zusammenziehen zur Wiederbefüllung der Rückhalte-Airbagkammer 37 wieder in diese eingeblasen werden. Bei Bedarf kann auch hier ggf. wieder beim Wiederauffüllen der Rückhalte-Airbagkammer über einen mehrstufigen Gasgenerator Gas gesteuert in die Rückhalte-Airbagkammer 37 zudosiert werden, was hier aber ebenfalls nicht dargestellt ist.

Die in Verbindung mit den Fig. 1 bis 3 näher erläuterte Funktionsweise der vorliegenden Erfindung ist auch bei den Ausführungsformen der Fig. 4 und Fig. 5 gegeben, was hier jedoch nicht nochmals explizit erläutert wurde.

### BEZUGSZEICHENLISTE

- 1: Lenkrad
- 2.o: Speiche
- 2.u: Speiche
- 3: Nabe
- 4: Lenkradkranz
- 5: Rückhaltepolster
- 6: Gasgenerator
- 7: Diffusor
- 8: Airbag
- 9: Raum
- 10: Verkleidung
- 11: Austrittsöffnung
- 12: Klappe
- 13: Befestigungslasche
- 14: Sicke
- 15: Lenksäule
- 16: Band
- 17: Gasgenerator
- 18: Diffusor
- 19: Airbag
- 20: Rückhaltepolster
- 21: Speiche
- 22: Deformationselement
- 23: Halterungsplatte
- 24: Verkleidung
- 25: Austrittsöffnung
- 26: Segment
- 27: Airbag
- 28: Druckkammer
- 29: Lenksäule
- 30: Druckkolben
- 31: Federelement
- 32: obere Druckkolbenposition
- 33: Pfeil
- 34: Pfeile
- 35: untere Druckkolbenposition
- 36: Airbag
- 37: Rückhalte-Airbagkammer
- 38: Refill-Airbagkammer
- 39: Lenkradkranz
- 40: Lenkradnabentopfbereich
- 41: Pfeil
- 42: Pfeile
- 43: Abdeckklappe
- 44: Abdeckklappe

## Patentansprüche

1. Lenkrad-Airbag-Rückhaltesystem für ein Kraftfahrzeug mit einem Lenkrad mit einer Nabe (13) und mit Speichen und einer im Bereich vor der Nabe (3) und innerhalb des Lenkradkranzes (4) angeordneten Kappe und einer auf der dem Fahrer abgewandten Seite der Kappe angeordneten Airbageinrichtung mit einem Gasgenerator (6), einem Diffusor (7) und einem fahrerseitig vor der Kappe und dem Lenkradkranz (4) entfaltbaren Airbag (8, 19), wobei die Kappe zu einem Rückhaltepolster (5, 20) ausgebildet ist, und wobei wenigstens eine Austrittsöffnung (11, 25) für den Airbag (8, 19) derart angeordnet ist, dass dieser im Bereich zwischen dem Rückhaltepolster (5, 20) und dem Lenkradkranz (4) aus dem Lenkrad (1) hervortritt, **dadurch gekennzeichnet, dass** sich die Speichen (2.o, 2.u, 21) von dem Lenkradkranz (4) ausgehend zu der auf der dem Fahrer abgewandten Seite des Lenkradkranzes (4) angeordneten Nabe (3) erstrecken und ein Skelett für einen Raum (9) bilden, in dem die Airbageinrichtung untergebracht ist, wobei der durch die Speichen (2.o, 2.u, 21) gebildete Raum (9) von einer Verkleidung (10, 24), in der die Austrittsöffnung (11, 25) angeordnet ist, umschlossen ist.

2. Rückhaltesystem nach Anspruch 1, **dadurch gekennzeichnet, dass** die Austrittsöffnung (11) durch eine nabenseitig angelenkte Klappe (12) verschlossen ist, die durch den sich entfaltenden Airbag (8) aufstoßbar gehalten ist und durch wenigstens ein zwischen dieser und der Verkleidung (10) oder einer Speiche (2.u) angeordnetes Band (16) in einer vorbestimmten Offenstellung gehaltert wird und eine Führungsfläche für den Airbag (8) bildet.

3. Rückhaltesystem nach Anspruch 1 oder 2, **dadurch gekennzeichnet, dass** die Airbageinrichtung zu einem Airbagmodul zusammengefaßt ist.

4. Rückhaltesystem nach Anspruch 3, **dadurch gekennzeichnet, dass** das Airbagmodul an wenigstens zwei Speichen (2.o) befestigt ist.

5. Rückhaltesystem nach einem der Ansprüche 1 bis 4, **dadurch gekennzeichnet, dass** das Rückhaltepolster (5) an den Speichen (2.o, 2.u, 21) gehaltert ist.

6. Rückhaltesystem nach einem der Ansprüche 2 bis 5, **dadurch gekennzeichnet, dass** die Airbageinrichtung und das Rückhaltepolster (20) zu einem Modul zusammengefaßt sind, das nabenseitig an den Speichen (21) gehaltert und lenkradkranzseitig axial zwischen diesen angeordnet ist.

7. Rückhaltesystem nach Anspruch 6, **dadurch gekennzeichnet, dass** der Gasgenerator (17) nabenseitig über Deformationselemente (22) mit den Speichen (21) verbunden und der Diffusor (18) entlang der Lenkradachse zentral angeordnet ist und das Rückhaltepolster (20) trägt.

8. Rückhaltesystem nach Anspruch 6, **dadurch gekennzeichnet, dass** der Gasgenerator (17) und/oder der Diffusor (18) als Deformationselement ausgebildet ist.

9. Rückhaltesystem nach einem der Ansprüche 1 bis 8, **dadurch gekennzeichnet, dass** in der Verkleidung (24) in zwei am Diffusor (18) gegenüberliegenden Bereichen Austrittsöffnungen für jeweils einen zwischen dem Rückhaltepolster (20) und dem Lenkradkranz (4) austretenden Airbag ausgebildet ist.

10. Rückhaltesystem nach einem der Ansprüche 1 bis 8, **dadurch gekennzeichnet, dass** in der Verkleidung (24) zwischen dem Rückhaltepolster (20) und dem Lenkradkranz (4) eine das Rückhaltepolster (20) umgebende ringförmige Austrittsöffnung (25) für einen ringförmigen Trichterairbag (19) ausgebildet ist.

11. Rückhaltesystem nach einem der Ansprüche 1 bis 10, **dadurch gekennzeichnet, dass** das Rückhaltepolster ein mit Schaumstoff gepolstertes Blechhohlteil ist und eine Öffnungsklappe seitlich vor der Anordnungsebene des Lenkradkranzes (4) für einen Airbagaustritt bei normaler Sitzposition aufweist.

12. Rückhaltesystem nach einem der Ansprüche 1 bis 11, **dadurch gekennzeichnet, dass** die Speichen (2.o, 2.u, 21) als Deformationselemente ausgebildet sind.

13. Rückhaltesystem nach einem der Ansprüche 1 bis 12, **dadurch gekennzeichnet, dass** das Lenkrad (1) aus einem ersten rohrförmigen Teil für den Lenkradkranz (4) und einem zweiten rohrförmigen Teil für die Nabe (3) und die Speichen (2.o, 2.u, 21) gebildet ist, wobei der zweite Teil einstückig ist und die gebildeten Speichensegmente zu Speichen (2.o, 2.u, 21) in der vorbestimmten Gestalt umgeformt sind.

14. Rückhaltesystem nach Anspruch 13, **dadurch gekennzeichnet, dass** die Speichen (2.o, 2.u, 21) durch Sicken (14) versteift sind.

15. Rückhaltesystem nach einem oder mehreren der vorhergehenden Ansprüche, **dadurch gekennzeichnet, dass** das Rückhaltepolster (5, 20) mit Schaumstoff hinterfüttert ist.

16. Rückhaltesystem nach einem oder mehreren der vorhergehenden Ansprüche, **dadurch gekennzeichnet, dass** das Lenkrad auf der dem Fahrer zugewandten Seite fugenlos gestaltet ist.

17. Rückhaltesystem nach einem oder mehreren der vorhergehenden Ansprüche, **dadurch gekennzeichnet, dass** das Rückhaltesystem eine Refillfunktion für wenigstens einen Airbag (27, 36) aufweist dergestalt, dass bei einem Aufprall eines Fahrzeuginsassen auf den wenigstens einen Airbag (27, 36) Gas aus diesem herausdrückbar und in wenigstens einen zusätzlichen Gasspeicher (28, 38) des Rückhaltesystems eindrückbar ist, und dass nach der Aufprallbelastung bei wenigstens teilweise erschlafftem wenigstens einen Airbag (27, 37) das im wenigstens einen zusätzlichen Gasspeicher (28, 38) aufgenommene Gas zur Wiederbefüllung des wenigstens einen Airbags aus dem wenigstens einen Gasspeicher (28, 38) heraus in den wenigstens einen Airbag zurückdrängbar und/oder zurückblasbar ist.

18. Rückhaltesystem nach Anspruch 17, **dadurch gekennzeichnet, dass** ein Lenksäulenabschnitt als den zusätzlichen Gasspeicher bildende Druckkammer (28) ausgebildet ist, in der ein Druckkolben (30) im Grundzustand durch ein Haltemittel (31) in einer oberen Druckkolbenposition (32) gehalten ist, dass bei einem Aufprall eines Fahrzeuginsassen auf den Airbag (27) der Druckkolben (30) mit Gas aus dem Airbag (27) beaufschlagbar ist dergestalt, dass der Druckkolben (30) in der Druckkammer (28) gegen die Haltekraft des Haltemittels (31) gasdicht aus der oberen Druckkolbenposition (32) heraus von der Lenkradnabe weg nach unten in eine untere Druckkolbenposition (35) verlagerbar ist, und dass nach der Aufprallbelastung und wenigstens teilweise erschlafftem Airbag (27) der Druckkolben (30) durch das Haltemittel (31) wieder in die obere Druckkolbenposition (32) verlagerbar ist dergestalt, dass das in die Druckkammer (30) eingeblasene Gas zur Wiederbefüllung des Airbags (27) in diesen einblasbar ist.

19. Rückhaltesystem nach Anspruch 18, **dadurch gekennzeichnet, dass** die Druckkammer (30) in einem oberen Lenksäulenabschnitt ausgebildet ist, in dem der Druckkolben (30) formschlüssig geführt ist.

20. Rückhaltesystem nach Anspruch 18 oder Anspruch 19, **dadurch gekennzeichnet, dass** das Haltemittel ein Kraftspeicher, vorzugsweise ein Federelement (31), oder ein komprimierbares Medium ist.

21. Rückhaltesystem nach Anspruch 17, **dadurch gekennzeichnet, dass** der Airbag (36) mehrkammrig aus einer Rückhalte-Airbagkammer (37) und wenigstens einer weiteren damit gekoppelten elastischen Refill-Airbagkammer (38) als zusätzlichem Gasspeicher aufgebaut ist dergestalt, dass bei einem Aufprall eines Fahrzeuginsassen auf die Rückhalte-Airbagkammer (37) Gas aus dieser in die wenigstens eine Refill-Airbagkammer (38) durch deren elastische Ausbeulung drückbar ist, und dass nach der Aufprallbelastung und dem wenigstens teilweisen Erschlaffen der Rückhalte-Airbagkammer (37) das Gas aus der wenigstens einer Refill-Airbagkammer (38) durch deren Zusammenziehen zur Wiederbefüllung wieder in die Rückhalte-Airbagkammer (37) einblasbar ist.

22. Rückhaltesystem nach Anspruch 21, **dadurch gekennzeichnet, dass** die wenigstens eine Refill-Airbagkammer (38) im Bereich hinter dem Lenkradkranz (39) angeordnet ist, dass der wenigstens einen Refill-Airbagkammer (38) im Lenkradnabentopfbereich (40) eine durch die sich aufblasende Refill-Airbagkammer (38) aufdrückbare Abdeckeinrichtung zugeordnet ist dergestalt, dass die Refill-Airbagkammer (38) unter Freigabe der von der Abdeckeinrichtung abgedeckten Airbagkammeraustrittöffnung ungehindert aufblasbar ist.

23. Rückhaltesystem nach einem der Ansprüche 17 bis 22, **dadurch gekennzeichnet, dass** bei Bedarf beim Wiederbefüllen des Airbags (27) bzw. der Rückhalte-Airbagkammer (37) über einen n-stufigen Gasgenerator Gas gesteuert in den Airbag (27) bzw. in die Rückhalte-Airbagkammer (37) zudosierbar ist.

## Claims

1. Steering wheel airbag restraint system for a motor vehicle, having a steering wheel with a hub (13) and with spokes and a cap arranged in the region in front of the hub (3) and within the steering wheel rim (4), and an airbag device, which is arranged on that side of the cap which faces away from the driver, with a gas generator (6), a diffuser (7) and an airbag (8, 19) which can be deployed on the driver's side in front of the cap and the steering wheel rim (4), the cap being designed to form a restraint cushion (5, 20), and at least one outlet opening (11, 25) for the airbag (8, 19) being arranged in such a manner that the latter emerges from the steering wheel (4) in the region between the restraint cushion (5, 20) and the steering wheel rim (4), **characterized in that** the spokes (2.o, 2.u, 21) extend from the steering wheel rim (4) to the hub (3), which is arranged on that side of the steering wheel rim (4) which faces away from the driver, and form a skeleton for a space (9) in which the airbag device is accommodated, the space (9) which is formed by the spokes (2.o, 2.u, 21) being enclosed by a covering (10, 24) in which the outlet opening (11, 25) is arranged.

2. Restraint system according to Claim 1, **characterized in that** the outlet opening (11) is closed by a flap (12) which is coupled on the hub side, is held in a manner such that it can be pushed open by the deploying airbag (8) and is secured in a predetermined open position by means of at least one tape (16) arranged between it and the covering (10) or a spoke (2.u), and forms a guide surface for the airbag (8).

3. Restraint system according to Claim 1 or 2, **characterized in that** the airbag device is combined into an airbag module.

4. Restraint system according to Claim 3, **characterized in that** the airbag module is fastened to at least two spokes (2.o).

5. Restraint system according to one of Claims 1 to 4, **characterized in that** the restraint cushion (5) is secured on the spokes (2.o, 2.u, 21).

6. Restraint system according to one of Claims 2 to 5, **characterized in that** the airbag device and the restraint cushion (20) are combined into a module which is secured on the spokes (21) on the hub side and is arranged axially between them on the steering wheel rim side.

7. Restraint system according to Claim 6, **characterized in that** the gas generator (17) is connected on the hub side to the spokes (21) via deformation elements (22), and the diffuser (18) is arranged centrally along the steering wheel axis and carries the restraint cushion (20).

8. Restraint system according to Claim 6, **characterized in that** the gas generator (17) and/or the diffuser (18) is/are designed as a deformation element.

9. Restraint system according to one of Claims 1 to 8, **characterized in that** outlet openings for in each case one airbag which emerges between the restraint cushion (20) and the steering wheel rim (4) are formed in the covering (24), in two regions lying opposite each other on the diffuser (18).

10. Restraint system according to one of Claims 1 to 8, **characterized in that** an annular outlet opening (25) which surrounds the restraint cushion (20) and is intended for an annular funnel-type airbag (19) is formed in the covering (24) between the restraint cushion (20) and the steering wheel rim (4).

11. Restraint system according to one of Claims 1 to 10, **characterized in that** the restraint cushion is a sheet-metal hollow part padded with foam, and has an opening flap laterally in front of the plane in which the steering wheel rim (4) is arranged, for the airbag to emerge in a normal sitting position.

12. Restraint system according to one of Claims 1 to 11, **characterized in that** the spokes (2.o, 2.u, 21) are designed as deformation elements.

13. Restraint system according to one of Claims 1 to 12, **characterized in that** the steering wheel (1) is formed from a first tubular part for the steering wheel rim (4) and a second tubular part for the hub (3) and the spokes (2.o, 2.u, 21), the second part being in a single piece, and the spoke segments which are formed being shaped into the predetermined form to provide spokes (2.o, 2.u, 21).

14. Restraint system according to Claim 13, **characterized in that** the spokes (2.o, 2.u, 21) are stiffened by beads (14).

15. Restraint system according to one or more of the preceding claims, **characterized in that** the restraint cushion (5, 20) has foam fed behind it.

16. Restraint system according to one or more of the preceding claims, **characterized in that** the steering wheel is of seamless design on the side facing the driver.

17. Restraint system according to one or more of the preceding claims, **characterized in that** the restraint system has a refill function for at least one airbag (27, 36) in such a manner that, in the case of an impact of a vehicle occupant against the at least one airbag (27, 36), gas can be pressed out of the latter and can be pressed into at least one additional gas store (28, 38) of the restraint system, and **in that**, after the impact load, with the at least one airbag (27, 37) at least partially relaxed, the gas accommodated in the at least one additional gas store (28, 38) can be forced back and/or blown back out of the at least one gas store (28, 38) into the at least one airbag in order to refill the at least one airbag.

18. Restraint system according to Claim 17, **characterized in that** one steering column section is designed as a pressure chamber (28) which forms the additional gas store and in which, in the normal state, a pressure piston (30) is retained in an upper pressure piston position (32) by a retaining means (31), **in that**, in the case of an impact of a vehicle occupant against the airbag (27), the pressure piston (30) can be charged with gas from the airbag (27) in such a manner that the pressure piston (30) can be displaced in the pressure chamber (28) counter to the retaining force of the retaining means (31) in a gastight manner from the upper pressure piston position (32) away from the steering wheel hub downwards into a lower pressure piston position (35), and **in that**, after the impact load and at least partially relaxed airbag (27), the pressure piston (30) can be displaced back into the upper pressure piston position (32) by the retaining means (31) in such a manner that the gas blown into the pressure chamber (30) can be blown into the airbag (27) in order to refill the latter.

19. Restraint system according to Claim 18, **characterized in that** the pressure chamber (30) is formed in an upper steering column section, in which the pressure piston (30) is guided in a form-fitting manner.

20. Restraint system according to Claim 18 or Claim 19, **characterized in that** the retaining means is an energy store, preferably a spring element (31), or a compressible medium.

21. Restraint system according to Claim 17, **characterized in that** the airbag (36) is constructed with a number of chambers comprising a restraint airbag chamber (37) and at least one further elastic refill airbag chamber (38), which is coupled to the restraint airbag chamber, as an additional gas store, in such a manner that, in the case of an impact of a vehicle occupant against the restraint airbag chamber (37), gas can be pressed out of the latter, by virtue of its elastic bulging, into the at least one refill airbag chamber (38), and **in that**, after the impact load and the at least partial relaxing of the restraint airbag chamber (37), the gas can be blown out of the at least one refill airbag chamber (38), by virtue of the latter contracting, back into the restraint airbag chamber (37) for refilling purposes.

22. Restraint system according to Claim 21, **characterized in that** the at least one refill airbag chamber (38) is arranged in the region behind the steering wheel rim (39), **in that** the at least one refill airbag chamber (38) is assigned, in the steering wheel hub cup region (40), a covering device, which can be pressed open by the inflating refill airbag chamber (38), in such a manner that the refill airbag chamber (38) can be blown open without obstruction by releasing the airbag chamber outlet opening covered by the covering device.

23. Restraint system according to one of Claims 17 to 22, **characterized in that**, when the need arises during the refilling of the airbag (27) or the restraint airbag chamber (37), gas can be metered in a controlled manner into the airbag (27) or into the restraint airbag chamber (37) via an n-stage gas generator.

## Revendications

1. Système de soutien pour airbag de volant pour véhicule automobile, comportant un volant à moyeu (13), des rayons, une calotte disposée dans la zone située devant le moyeu (3) et à l'intérieur de la couronne du volant (4) et un dispositif d'airbag disposé sur le côté de la calotte détourné du conducteur et comportant un générateur de gaz (6), un diffuseur (7) et un airbag (8, 19) pouvant se déplier côté conducteur devant la calotte et la couronne du volant (4), la calotte étant réalisée de manière à constituer un coussin de soutien (5, 20) et au moins une ouverture de sortie (11, 25) pour l'airbag (8 , 19) étant disposée de manière à faire saillie à l'extérieur du volant (1) dans la zone située entre le coussin de soutien (5, 20) et la couronne du volant (4), **caractérisé en ce que** les rayons (2 bas, 2 haut, 21), en partant de la couronne du volant (4), s'étendent vers le moyeu (3) disposé du côté de la couronne du volant (4) détourné du conducteur et forment une ossature pour un espace (9) dans lequel est logé le dispositif d'airbag, l'espace (9) délimité par les rayons (2 haut, 2 bas, 21) étant entouré d'un revêtement (10, 24) dans lequel est pratiquée l'ouverture de sortie (11, 25).

2. Système de soutien selon la revendication 1, **caractérisé en ce que** l'ouverture de sortie (11) est fermée par un abattant (12) articulé côté moyeu et qui est maintenu de manière à pouvoir être percuté par l'airbag (8) se dépliant et est fixé par au moins une bande (16) disposée entre cet abattant et le revêtement (10) ou un rayon (2 bas) dans une position d'ouverture prédéfinie et constitue une surface de guidage pour l'airbag (8).

3. Système de soutien selon la revendication 1 ou 2, **caractérisé en ce que** le dispositif d'airbag est regroupé en un module d'airbag.

4. Système de soutien selon la revendication 3, **caractérisé en ce que** le module d'airbag est fixé à au moins deux rayons (2 haut).

5. Système de soutien selon l'une quelconque des revendications 1 à 4, **caractérisé en ce que** le coussin de soutien (5) est fixé sur les rayons (2 haut, 2 bas, 21).

6. Système de soutien selon l'une quelconque des revendications 2 à 5, **caractérisé en ce que** le dispositif d'airbag et le coussin de soutien (20) sont regroupés en un module qui est fixé côté moyeu sur les rayons (21) et est disposé axialement entre ceux-ci côté couronne du volant.

7. Système de soutien selon la revendication 6, **caractérisé en ce que** le générateur de gaz (17) est relié côté moyeu par des éléments de déformation (22) aux rayons (21) et que le diffuseur (18) est disposé au centre le long de l'axe du volant et supporte le coussin de soutien (20).

8. Système de soutien selon la revendication 6, **caractérisé en ce que** le générateur de gaz (17) et/ou le diffuseur (18) sont réalisés sous forme d'un élément de déformation.

9. Système de soutien selon l'une quelconque des revendications 1 à 8, **caractérisé en ce que**, dans le revêtement (24), dans deux zones opposées du diffuseur (18), des ouvertures de sortie pour respectivement un airbag sortant entre le coussin de soutien (20) et la couronne du volant (4) sont pratiquées.

10. Système de soutien selon l'une quelconque des revendications 1 à 8, **caractérisé en ce que**, dans le revêtement (24), entre le coussin de retenue (20) et la couronne du volant (4), une ouverture de sortie (25) de forme annulaire entourant le coussin de soutien (20) pour un airbag en entonnoir de forme annulaire (19) est pratiquée.

11. Système de soutien selon l'une quelconque des revendications 1 à 10, **caractérisé en ce que** le coussin de soutien est une pièce creuse en tôle rembourrée de mousse et présente un abattant d'ouverture latéralement avant la zone de disposition de la couronne du volant (4) pour une sortie de l'airbag en position assise normale.

12. Système de soutien selon l'une quelconque des revendications 1 à 11, **caractérisé en ce que** les rayons (2 haut, 2 bas, 21) sont réalisés sous forme d'éléments de déformation.

13. Système de soutien selon l'une quelconque des revendications 1 à 12, **caractérisé en ce que** le volant (1) est constitué d'une première pièce de forme tubulaire pour la couronne du volant (4) et d'une deuxième pièce de forme tubulaire pour le moyeu (3) et les rayons (2 haut, 2 bas, 21), la deuxième pièce étant en un seul morceau et les segments de rayons constitués étant déformés pour former des rayons (2 haut, 2 bas, 21) dans la forme prédéfinie.

14. Système de soutien selon la revendication 13, **caractérisé en ce que** les rayons (2 haut, 2 bas, 21) sont rigidifiés par des moulures (14).

15. Système de soutien selon l'une quelconque ou plusieurs des revendications précédentes, **caractérisé en ce que** le coussin de retenue (5, 20) est doublé de mousse.

16. Système de soutien selon l'une quelconque ou plusieurs des revendications précédentes, **caractérisé en ce que** le volant est réalisé sans joint du côté tourné vers le conducteur.

17. Système de soutien selon l'une quelconque ou plusieurs des revendications précédentes, **caractérisé en ce que** le système de soutien présente une fonction de regonflage pour au moins un airbag (27, 36), de telle sorte qu'en cas de choc d'un passager du véhicule sur l'au moins un airbag (27, 36), du gaz peut être exprimé de celui-ci et comprimé dans au moins un accumulateur de gaz supplémentaire (28, 38) du système de soutien et qu'après la sollicitation par choc, lorsqu'au moins un airbag (27, 37) est au moins partiellement dégonflé, le gaz récupéré dans l'au moins un accumulateur de gaz supplémentaire (28, 38), pour regonfler l'au moins un airbag, peut être refoulé et/ou ressoufflé hors de l'au moins un accumulateur de gaz (28, 38) dans l'au moins un airbag.

18. Système de soutien selon la revendication 17, **caractérisé en ce qu'**une section de colonne de direction est réalisée sous forme de chambre de compression (28) constituant l'accumulateur de gaz supplémentaire, dans laquelle un piston de compression (30) est maintenu en état de base par un moyen de retenue (31) dans une position supérieure du piston de compression (32), qu'en cas de choc d'un passager du véhicule sur l'airbag (27), le piston de compression (30) peut recevoir du gaz provenant de l'airbag (27) de manière à ce que le piston de compression (30) puisse être éloigné hors du moyeu du volant dans la chambre de compression (28) à l'encontre de la force de retenue du moyen de retenue (31) et de manière étanche au gaz en partant de la position supérieure du piston de compression (32) en direction du bas vers une position inférieure du piston de compression (35) et qu'après la sollicitation par choc et le dégonflement au moins partiel de l'airbag (27), le piston de compression (30) puisse être ramené par le moyen de retenue (31) vers la position supérieure du piston de compression (32), de sorte que le gaz soufflé dans la chambre de compression (30), pour regonfler l'airbag (27), peut être soufflé dans celui-ci.

19. Système de soutien selon la revendication 18, **caractérisé en ce que** la chambre de compression (30) est réalisée dans une section supérieure de la colonne de direction, dans laquelle le piston de compression (30) est guidé en correspondance géométrique.

20. Système de soutien selon la revendication 18 ou la revendication 19, **caractérisé en ce que** le moyen de retenue est un accumulateur de force, de préférence un élément à ressort (31) ou un fluide compressible.

21. Système de soutien selon la revendication 17, **caractérisé en ce que** l'airbag (36) est structuré avec plusieurs chambres constituées d'une chambre d'airbag de soutien (37) et d'au moins une autre chambre élastique d'airbag de regonflage (38) couplée à celle-ci et servant d'accumulateur de gaz supplémentaire de sorte qu'en cas de choc d'un passager du véhicule sur la chambre d'airbag de soutien (37), du gaz peut être comprimé en provenance de celle-ci dans l'au moins une chambre d'airbag de regonflage (38) par son bombement élastique et qu'après la sollicitation par choc et le dégonflement au moins partiel de la chambre d'airbag de soutien (37), le gaz provenant de l'au moins une chambre d'airbag de regonflage (38), par contraction de celle-ci, peut être ressoufflé pour regonflage dans la chambre d'airbag de soutien (37).

22. Système de soutien selon la revendication 21, **caractérisé en ce que** l'au moins une chambre d'airbag de regonflage (38) est disposée dans la zone située derrière la couronne du volant (39), qu'à l'au moins une chambre d'airbag de regonflage (38) est associé, au niveau du creux du moyeu du volant (40), un dispositif de recouvrement pouvant être comprimé par la chambre d'airbag de regonflage (38) se gonflant, de sorte que la chambre d'airbag de regonflage (38) est gonflable sans obstacles en libérant l'ouverture de sortie de la chambre de l'airbag recouverte par le dispositif de recouvrement.

23. Système de soutien selon l'une quelconque des revendications 17 à 22, **caractérisé en ce qu'**en cas de besoin, lors du regonflage de l'airbag (27) ou de la chambre d'airbag de soutien (37) par un générateur de gaz à n niveaux, du gaz peut être dosé de manière contrôlée dans l'airbag (27) ou dans la chambre d'airbag de soutien (37).
